# EUROPÄISCHE PATENTSCHRIFT

(11) **EP 0 985 162 B1**
(45) Veröffentlichungstag und Bekanntmachung des Hinweises auf die Patenterteilung: **15.07.2009**
(21) Anmeldenummer: 99901566.2
(22) Anmeldetag: 10.02.1999
(51) Int. Cl.: G02B 6/38

(54) **KONTAKTSTECKERANORDNUNG FÜR LICHTWELLENLEITER**
CONTACT CONNECTOR SYSTEM FOR LIGHT WAVEGUIDES
SYSTEME DE CONNECTEURS DE CONTACT POUR GUIDES D'ONDES LUMINEUSES

(30) Priorität: 17.02.1998 CH 37798
(43) Veröffentlichungstag der Anmeldung: 15.03.2000
(73) Patentinhaber: Reichle & De-Massari AG, 8620 Wetzikon (CH)
(72) Erfinder: REICHLE, Hans, CH-8620 Wetzikon (CH)
(74) Vertreter: Liebetanz, Michael
(86) Internationale Anmeldenummer: PCT/CH1999/000061
(87) Internationale Veröffentlichungsnummer: WO 1999/042877

(56) Entgegenhaltungen:
- EP-A- 0 677 757
- EP-A- 0 689 069
- US-A- 5 381 498

## Beschreibung

Die vorliegende Erfindung betrifft eine Kontaktsteckeranordnung für Lichtwellenleiter des international normierten Steckverbinders SC, deren Anschlussenden je durch einen Steckerteil gebildet sind.

Für Steckverbindungen sind die hochempfindlichen Anschlussenden von Lichtwellenleiter bereits anschlussfertig konfektioniert, um deren Handhabung zu ermöglichen. Hierfür enden die Lichtwellenleiter jeweils über einen Knickschutz an einer Krimphülse und einer Endferrule, welche von einem Steckerteil umschlossen sind.

Eine Kontaksteckeranordnung dieses Typs mit den Merkmalen des Oberbegriffs des Anspruch 1 ist aus der EP-A-0 667 554 bekannt.

Problematisch hierbei ist aber, dass solche Steckerteile nicht ohne weiteres für die heute mehrheitlich üblichen modularen elektrischen Steckverbindungssysteme, wie RJ 45, Verwendung finden können, da der Querschitt der Steckerteile nicht mit den Stecköffnungen der elektrischen Steckverbindungssysteme übereinstimmen.

Es ist deshalb Aufgabe der vorliegenden Erfindung, eine Kontaktsteckeranordnung für Lichtwellenleiter des international normierten Steckverbinders SC mit je durch einen Steckerteil gebildete Anschlussenden zu schaffen, welche die Querschnittsabmessungen modulare elektrischer Steckverbindungssysteme RJ 45 haben.

Diese Aufgabe wird fur eine Anordnung der eingangs genannten Art mit den kennzeichnenden Merkmalen des Anspruch 1 gelöst.

Dies wird nunmehr zunächst erreicht durch ein, mindestens zwei Steckerteile aufnehmendes, der manuellen Handhabung des Steckvorganges dienendes Steckergehäuse, welches über Kupplungsmittel formschlüssig mit vorgegebenen Stecköffnungen eines elektrischen Steckverbindungssystems RJ 45 zusammenwirkt.

Durch diese Massnahmen ist es nunmehr möglich, die als Steckerteil konfektionierten Anschlussenden von Lichtwellenleitern direkt für modulare elektrische Steckverbindungssysteme RJ 45 zu verwenden, wobei die erfindungsgemässe Zwischenschaltung der Kupplungsmittel zudem eine kompakte Bauweise ergibt.

Eine vorteilhafte Ausgestaltung der erfindungsgemässen Kontaktsteckeranordnung kann weiter darin gesehen werden, dass die Kupplungsmittel zwei im wesentlichen gleiche Gehäuseteile umfassen, welche über Flanschmittel oder dgl. verbunden sind und welche der Kontaktierung dienende Mittel, wie Raster und Steckerhülsen umschliessen, ferner, wenn die Gehäuseteile formschlüssig zu den vorgegebenen Stecköffnungen ausgestaltet sind, ferner, wenn das Gehäuseteil dem lösbaren Aufstecken des Steckergehäuses mit den Steckerteilen an den Enden der Lichtwellenleiter dient, wenn weiter an den Gehäuseteilen Führungsnuten und am Steckergehäuse Führungsnocken angeordntet sind und wenn das Steckergehäuse über Klinkenmittel mit dem betreffenden Gehäuseteil zusammenwirkt.

Beispielsweise Ausführungsformen des Erfindungsgegenstandes sind nachfolgend anhand der Zeichnung näher erläutert. Es zeigen:

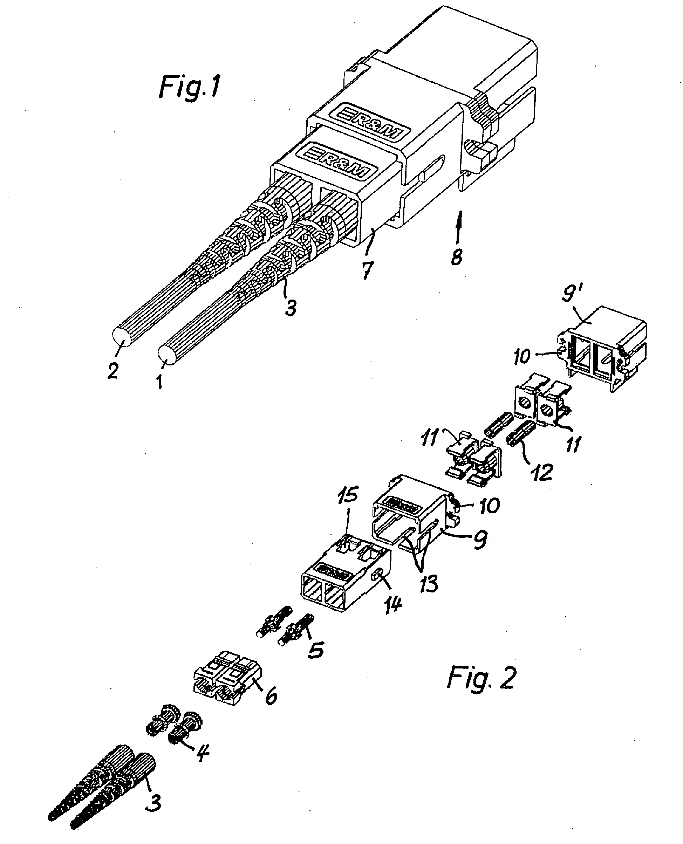

- Fig. 1: in schaubildartiger Darstellung eine Kontaktsteckeranordnung für Lichtwellenleiter;
und
- Fig. 2: in Explosivdarstellung, in kleinerem Massstab, die Anordnung gemäss Fig. 1.

Die Kontaktsteckeranordnung ist hier beispielsweise für zwei Lichtwellenleiter 1 und 2 des international normierten Steckverbinders SC vorgesehen, deren Anschlussenden jeweils über einen Knickschutz 3 an einer Krimphülse 4 und einer Endferrule 5 enden, welche von einem Steckerteil 6 umschlossen sind.

Erfindungsgemäss ist nun ein, mindestens und hier zwei Steckerteile 6 aufnehmendes, der manuellen Handhabung des Steckvorganges dienendes Steckergehäuse 7 vorgesehen, welches über Kupplungsmittel 8 formschlüssig mit vorgegebenen, international genormten Stecköffnungen (nicht gezeigt) eines elektrischen Steckverbindungssystems RJ 45 zusammenwirkt.

Die Kupplungsmittel umfassen dabei zwei im wesentlichen gleiche Gehäuseteile 9 ,9', welche über Flanschmittel 10 oder auch Klinkenmittel u. dgl. verbunden sind und welche der Kontaktierung dienende Mittel, wie Raster 11 und Steckerhülsen 12 umschliessen.

Die Gehäuseteile 9,9' sind dabei formschlüssig der genannten Stecköffnungen ausgestaltet.

Ferner dient ein solches Gehäuseteil 9,9' dem lösbaren Aufstecken des Steckergehäuses 7 mit den Steckerteilen 6 an den Enden der Lichtwellenleiter 1 und 2. Hierfür können an den Gehäuseteilen 9,9' Führungsnuten 13 und am Steckergehäuse 7 Führungsnocken 14 vorgesehen sein. Ferner kann das Steckergehäuse 7 auch noch über Klinkenmittel 15 mit dem betreffenden Gehäuseteil 9 oder 9' zusammenwirken.

Durch diese Massnahmen ist es nunmehr möglich, die als Steckerteil konfektionierten Anschlussenden von Lichtwellenleitern direkt für modulare elektrische Steckverbindungssysteme RJ 45, zu verwenden, wobei die erfindungsgemässe Zwischenschaltung der Kupplungsmittel zudem eine kompakte Bauweise ergibt.

Es wird Schutz beansprucht wie folgt:

## Patentansprüche

1. Kontaktsteckeranordnung für den Steckverbinder SC mit einem Kupplungsmittel, umfassend zwei seitlich nebeneinander angeordnete Steckerhülsen (12) sowie ein jede Steckerhülse (12) umgebendes SC-Halteraster (11) in einem beide Steckerhülsen (12) und SC-Halteraster (11) aufnehmenden Kupplungsgehäuse (9, 9'), wobei die Ebenen jeder Lasche eines der SC-Halteraster (11) mit einer entsprechenden Ebene einer Lasche des benachbarten SC-Halterasters (11) fluchtet, **dadurch gekennzeichnet, dass** das Kupplungsgehäuse (9, 9') beide Steckerhülsen (12) und SC-Halteraster (11) in einem einzigen zusammenhängenden Aufnahmeraum umgibt, dass die zur Aufnahme von einem jeweiligen Führungsnocken (14) eines SC-Steckverbinders vorgesehenen Führungsnuten (13) in dem Kupplungsgehäuse (9, 9') in seitlich einander gegenüber liegenden Wänden des Aufnahmeraums mit dazwischenliegenden zwei Steckerhülsen (12) angeordnet sind, und dass die Aussenseite der Kupplungsmittel formschlüssig in vorgegebene Stecköffnungen eines Steckverbindungssystems RJ45 einschiebbar ist.

2. Kontaktsteckeranordnung nach Anspruch 1, **dadurch gekennzeichnet, dass** eine weitere Führungsnut (13) mittig im Boden des Kupplungsgehäuse (9, 9') zwischen den seitlich einander gegenüber liegenden Wänden angeordnet ist.

3. Kontaktsteckeranordnung nach einem der Ansprüche 1 oder 2, **dadurch gekennzeichnet, dass** das Kupplungsgehäuse (9, 9') über Flanschmittel (10) verfügt.

4. Steckergehäuse (7) zur Einführung in eine Kontaktsteckeranordnung nach einem der Ansprüche 1 bis 3 mit zwei Lichtwellenleitersteckerteilen (6) des SC-Steckverbinders, die mit dem SC-Halteraster (11) der Kontaktsteckeranordnung zusammenwirken, **dadurch gekennzeichnet, dass** das Steckergehäuse (7), in das die Lichtwellenleitersteckerteile (6) eingesetzt sind, einstückig ist, dass die Lichtwellenleitersteckerteile (6) für den Eingriff in die SC-Halteraster (11) und Steckerhülsen (12) der besagten Kontaktsteckeranordnung orientiert sind, und dass die Führungsnocken (14) an gegenüberliegenden Seitenwänden des Steckergehäuses (7) integriert vorgesehen sind, wobei die Führungsnocken (14) den SC-Führungsnocken entsprechen, und dass das Steckergehäuse (7) über Klinkenmittel (15) verfügt, durch die die SC-Halteraster (11) durchgreifen und mit den Lichtwellenleitersteckerteilen (6) zusammenwirken.

## Claims

1. A contact connector arrangement for the SC-type connector with a coupling means, comprising two plug sockets (12) arranged in a laterally juxtaposed manner as well as an SC-type latch means (11) enclosing each plug socket (12) in a connector housing (9, 9') which receives both plug sockets (12) and SC-type latch means (11), wherein the planes of each lug of one of the SC-latch means (11) are aligned with a corresponding plane of a lug of the neighbouring SC-type latch means (11), **characterized in that** the coupling housing (9, 9') encloses both plug sockets (12) and SC-type latch means (11) in a single contiguous cavity, that the guide grooves (13) which are provided to receive a corresponding cam follower (14) of an SC-type connector are arranged in the coupling housing (9, 9') in laterally opposed walls of the cavity with two interposed plug sockets (12), and that the outside of the coupling means is insertable in a positive locking manner into predetermined plug-in openings of a connector system RJ 45.

2. A contact connector arrangement according to claim 1, **characterized in that** an additional guide groove (13) is arranged centrally in the base of the coupling housing (9, 9') between the walls arranged laterally opposite to each other.

3. A contact connector arrangement according to one of claims 1 or 2, **characterized in that** the coupling housing (9, 9') has flange means (10).

4. Connector housing (7) for insertion into a contact connector arrangement according to one of claims 1 to 3, comprising two optical waveguide male connector parts (6) of the SC-type connector, which cooperate with the SC-type latch means (11) of the contact connector arrangement, **characterized in that** the connector housing (7), in which the optical waveguide male connector parts (6) are inserted, is formed as one piece, that the optical waveguide male connector parts (6) are oriented for engagement in the SC-type latch means (11) and plug sockets (12) of said contact connector arrangement, and that the cam followers (14) are provided in an integral manner on the opposite side walls of the connector housing (7), wherein the cam followers (14) correspond to the SC-type cam followers, and that the connector housing (7) has catch means (15), through which the SC-type latch means (11) engage and cooperate with the optical waveguide male connector parts (6).

## Revendications

1. Système de connecteurs de contact pour un connecteur du type SC avec un moyen d'accouplement comprenant deux douilles de connecteurs (12) arrangées latéralement adjacentes ainsi qu'une trame de maintien SC (11) entourant chaque douille de connecteurs (12) dans un boitier d'accouplement (9, 9') recevant les deux douilles de connecteurs (12) et la trame de maintien SC (11), où les plans de chaque patte de l'une des trames de maintien SC (11) sont alignés avec un plan correspondant d'une patte de la trame de maintien SC (11) adjacente, **caractérisé en ce que** le boitier d'accouplement (9, 9') entoure les deux douilles de connecteurs (12) et la trame de maintien SC (11) dans un seul espace de réception connexe, **en ce que** les rainures de guidage (13) prévues pour recevoir une came de guidage (14) correspondant à un connecteur du type SC sont arrangées dans le boitier d'accouplement (9, 9') dans des parois latéralement opposées de l'espace de réception avec les deux douilles de connecteurs (12) arrangées en intermédiaire, et **en ce que** la face extérieure des moyens d'accouplement peut être insérée à complementarité de forme dans des ouvertures connecteurs d'un système de connecteurs RJ45.

2. Système de connecteurs selon la revendication 1, **caractérisé en ce qu'**une rainure de guidage (13) additionnelle est prévue au milieu du fond du boitier d'accouplement (9, 9') entre les parois latéralement opposées.

3. Système de connecteurs selon l'une des revendications 1 ou 2, **caractérisé en ce que** le boitier d'accouplement (9, 9') comprend des moyens de bride (10).

4. Boitier de connecteurs (7) pour une introduction dans un système de connecteurs selon l'une des revendications 1 à 3 avec deux éléments connecteurs de guides d'ondes lumineuses (6) du connecteur SC, qui coopèrent avec la trame de maintien SC (11) du système de connecteurs, **caractérisé en ce que** le boitier de connecteurs (7), dans lequel les éléments connecteurs de guides d'ondes lumineuses (6) sont insérés, est en une seule pièce, **en ce que** les éléments connecteurs de guides d'ondes lumineuses (6) sont orientés pour un engagement dans les trames de maintien SC (11) et les douilles connecteurs (12) dudit système de connecteurs, et **en ce que** les cames de guidage (14) sont intégrées dans les parois latéralement opposées du boitier de connecteurs (7), où les cames des guidage (14) correspondent aux cames de guidage SC, et **en ce que** le boîtier de connecteurs (7) comprend des moyens d'enclenchement (15) qui sont traversés par les trames de maintien SC (11) et qui coopèrent avec les éléments connecteurs de guides d'ondes lumineuses (6).
